(19) Europäisches Patentamt
European Patent Office
Office européen des brevets

(11) **EP 4 521 309 A1**

(12) **EUROPEAN PATENT APPLICATION**
published in accordance with Art. 153(4) EPC

(43) Date of publication:
**12.03.2025  Bulletin 2025/11**

(21) Application number: **23799256.5**

(22) Date of filing: **04.05.2023**

(51) International Patent Classification (IPC):
*G06N 20/00* (2019.01)

(52) Cooperative Patent Classification (CPC):
**G06F 18/214; G06N 3/048; G06N 3/0499;**
**G06N 3/084; G06N 20/00; H04W 24/02**

(86) International application number:
**PCT/CN2023/092028**

(87) International publication number:
**WO 2023/213270 (09.11.2023 Gazette 2023/45)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **06.05.2022  CN 202210489247**

(71) Applicant: **Vivo Mobile Communication Co., Ltd.**
**Dongguan, Guangdong 523863 (CN)**

(72) Inventors:
• **SUN, Bule**
  **Dongguan, Guangdong 523863 (CN)**
• **YANG, Ang**
  **Dongguan, Guangdong 523863 (CN)**

(74) Representative: **Cabinet Beaumont**
**4, Place Robert Schuman**
**B.P. 1529**
**38025 Grenoble Cedex 1 (FR)**

(54) **MODEL TRAINING PROCESSING METHODS, APPARATUS, TERMINAL AND NETWORK SIDE DEVICE**

(57)    This application relates to the field of communication technologies, and discloses a model training processing method and apparatus, a terminal, and a network side device. The model training processing method in embodiments of this application includes: obtaining, by a first device, first information, the first information including first data; and processing, by the first device, the first data by using a first model to obtain second data, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

FIG. 3

## Description

### CROSS-REFERENCE TO RELATED APPLICATIONS

This application claims priority to Chinese Patent Application No. 202210489247.9 filed in China on May 6, 2022, the entire content of which is hereby incorporated by reference.

### TECHNICAL FIELD

This application relates to the field of communication technologies, and specifically, to a model training processing method and apparatus, a terminal, and a network side device.

### BACKGROUND

With the development of communication technologies, a communication scenario based on artificial intelligence (Artificial Intelligence, AI) has been introduced in wireless communication. Currently, in many scenarios of wireless communication based on AI, it is difficult to obtain a large volume of labeled data. Without a large volume of labeled data, it is impossible to train a suitable model through supervised learning, resulting in low reliability in communication. Therefore, the prior art has a problem of relatively low reliability in AI-based wireless communication.

### SUMMARY

Embodiments of this application provide a model training processing method and apparatus, a terminal, and a network side device, to improve reliability of AI-based wireless communication.

According to a first aspect, a model training processing method is provided, including:

obtaining, by a first device, first information, the first information including first data; and
processing, by the first device, the first data by using a first model to obtain second data, where
both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to a second aspect, a model training processing method is provided, including:

sending, by a second device, second information to a first device, the second information including a first model, and the first model being used by the first device to obtain second data based on first data, where
both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to a third aspect, a model training processing apparatus is provided, including:

an obtaining module, configured to obtain first information, the first information including first data; and
a processing module, configured to process the first data by using a first model to obtain second data, where
both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to a fourth aspect, a model training processing apparatus is provided, including:

a second sending module, configured to send second information to a first device, the second information including a first model, and the first model being used by the first device to obtain second data based on first data, where
both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to a fifth aspect, a model training processing apparatus is provided, including:

a third sending module, configured to send first information to a first device, the first information including first data, and the first data being used by the first device to obtain second data based on a first model, where
both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to a sixth aspect, a terminal is provided, including a processor and a memory, where the memory stores a program or an instruction runnable on the processor, and the program or the instruction, when executed by the processor, implements the steps of the method according to the first aspect.

According to a seventh aspect, a terminal is provided, including a processor and a communication interface.

When the terminal is a first device, the processor is configured to obtain first information, the first information including first data; and process the first data by using a first model to obtain second data, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the terminal is a first device, the communication interface is configured to send second information to the first device, the second information including a first model, and the first model being used by the first device to obtain second data based on first data, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the terminal is a first device, the communication interface is configured to send first information to the first device, the first information including first data, and the first data being used by the first device to obtain second data based on a first model, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to an eighth aspect, a network side device is provided, including a processor and a memory, where the memory stores a program or an instruction runnable on the processor, and the program or the instruction, when executed by the processor, implements the steps of the method according to the second aspect.

According to a ninth aspect, a network side device is provided, including a processor and a communication interface.

When the network side device is a first device, the processor is configured to obtain first information, the first information including first data; and process the first data by using a first model to obtain second data, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the network side device is a first device, the communication interface is configured to send second information to the first device, the second information including a first model, and the first model being used by the first device to obtain second data based on first data, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the network side device is a first device, the communication interface is configured to send first information to the first device, the first information including first data, and the first data being used by the first device to obtain second data based on a first model, where both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

According to a tenth aspect, a readable storage medium is provided, storing a program or an instruction, where the program or the instruction, when executed by a processor, implements the steps of the method according to the first aspect, or implements the steps of the method according to the second aspect.

According to an eleventh aspect, a chip is provided, including a processor and a communication interface, where the communication interface is coupled to the processor, and the processor is configured to run a program or an instruction to implement the steps of the method according to the first aspect, or implement the steps of the method according to the second aspect.

According to a twelfth aspect, a computer program/program product is provided, stored in a storage medium and executed by at least one processor to implement the steps of the method according to the first aspect, or implement the steps of the method according to the second aspect.

In the embodiments of this application, a first device obtains first information, the first information including first data; and the first device processes the first data by using a first model to obtain second data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data. In this way, more labeled training data can be obtained by using the first model, so that the second model can effectively converge in a training process, thereby improving performance of the second model. Therefore, reliability of AI-based wireless communication can be improved in the embodiments of this application.

## BRIEF DESCRIPTION OF THE DRAWINGS

FIG. 1 is a structural diagram of a network system to which an embodiment of this application is applicable;

FIG. 2 is a schematic structural diagram of neurons;

FIG. 3 is a first flowchart of a model training processing method according to an embodiment of this application;

FIG. 4 is a second flowchart of a model training processing method according to an embodiment of this application;

FIG. 5 is a third flowchart of a model training processing method according to an embodiment of this application;

FIG. 6 is a fourth flowchart of a model training processing method according to an embodiment of this application;

FIG. 7 is a fifth flowchart of a model training processing method according to an embodiment of this application;

FIG. 8 is a sixth flowchart of a model training processing method according to an embodiment of this application;

FIG. 9 is a first structural diagram of a model training processing apparatus according to an embodiment of this application;

FIG. 10 is a second structural diagram of a model training processing apparatus according to an embodiment of this application;

FIG. 11 is a third structural diagram of a model training processing apparatus according to an embodiment of this application;

FIG. 12 is a structural diagram of a communication device according to an embodiment of this application;

FIG. 13 is a structural diagram of a terminal according to an embodiment of this application; and

FIG. 14 is a structural diagram of another network side device according to an embodiment of this application.

## DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application fall within the protection scope of this application.

The terms "first", "second", and so on in this specification and claims of this application are intended to distinguish between similar objects but are not intended to describe a specific order or sequence. It should be understood that the terms used in such a way are interchangeable in proper circumstances, so that the embodiments of this application can be implemented in other sequences than those illustrated or described herein. In addition, the objects distinguished by "first" and "second" are usually of one type, and there is no limitation on quantities of the objects. For example, there may be one or more first objects. In addition, "and/or" in this specification and the claims indicate at least one of the connected objects, and the character "/" usually indicates an "or" relationship between the associated objects.

It should be noted that, the technologies described in the embodiments of this application are not limited to a Long Term Evolution (Long Term Evolution, LTE)/LTE-Advanced (LTE-Advanced, LTE-A) system, and can be further used in other wireless communication systems, such as Code Division Multiple Address (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. The following description describes a New Radio (New Radio, NR) system for exemplary purposes, and uses NR terms in most of the following descriptions, but these technologies are also applicable to applications other than the NR system application, such as a 6th generation (6th Generation, 6G) communication system.

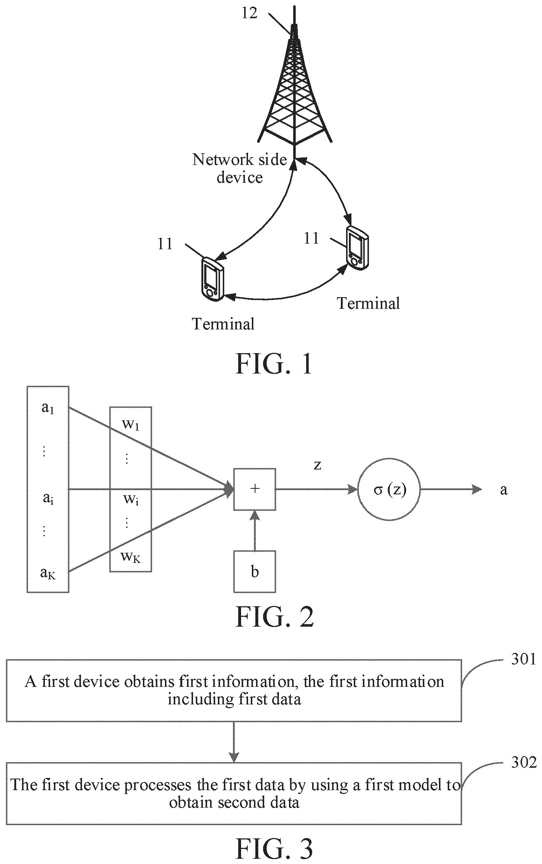

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicular user equipment (Vehicle User Equipment, VUE), a pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, a self-service machine, and other terminal-side devices. The wearable device includes a smartwatch, a smart band, a smart headphone, smart glasses, smart jewelry (a smart bracelet, a smart wrist-band, a smart ring, a smart necklace, a smart anklet, a smart ankle chain, and the like), a smart wrist strap, smart clothes, and the like. It should be noted that a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a WiFi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting/receiving point (Transmitting Receiving Point, TRP), or some other suitable term in the art. As long as the same technical effect is achieved, the base station is not limited to a specific technical term. It should be noted that in this embodiment of this application, only a base station in an NR system is used as an example for description, and a specific type of the base station is not limited.

For ease of understanding, some contents involved in the embodiments of this application are described below.

I. Artificial intelligence.

At present, artificial intelligence is widely applied in various fields. There are a plurality of implementations of AI modules, for example, a neural network, a decision tree, a support vector machine, and a Bayes classifier. In this application, a neural network is used as an example for description, but a specific type of the AI module is not limited.

The neural network includes neurons, and a schematic diagram of the neurons is shown in FIG. 2.

$z = \sum_{i=1}^{k} a_i w_i + b$, $a_i$ is an input, w is a weight (multiplicative coefficient), b is a bias (additive coefficient), and $\sigma(.)$ is an activation function. Common activation functions include a S-type function (Sigmoid), a hyperbolic tangent function (tanh), a rectified linear unit ReLU (Rectified Linear Unit), and the like.

Parameters of the neural network are optimized by using an optimization algorithm. Optimization algorithms are a type of algorithms that can help minimize or maximize an objective function (sometimes referred to as a loss function). The objective function is usually a mathematical combination of a model parameter and data. For example, data x and a label Y corresponding to the data x are given, and a neural network model f (.) is constructed. With this model, a predicted output f (x) may be obtained based on an input x, and a gap (f(x) - Y) between a predicted value and a real value may be calculated. This is a loss function. The objective of this application is to find proper W, b to minimize the value of the loss function. A smaller loss value indicates that the model is closer to the real situation.

Currently, common optimization algorithms are basically based on an error back propagation (error Back Propagation, BP) algorithm. A basic idea of the BP algorithm is that a learning process includes two processes: signal forward propagation and error back propagation. During forward propagation, an input sample is transmitted from an input layer, processed layer by layer by each hidden layer, and then transmitted to an output layer. If an actual output of the output layer does not match an expected output, an error back propagation stage is performed. The error back propagation is to transmit an output error in a form layer by layer back to the input layer through hidden layers, and distribute the error to all units at each layer, to obtain an error signal of the units at each layer. This error signal is used as a basis for correcting a weight of each unit. Such a weight adjustment process at each layer of signal forward propagation and error back propagation is performed cyclically. The process of continuously adjusting the weight is a learning and training process of the network. This process continues until an error outputted by the network is reduced to an acceptable degree or a preset quantity of times of learning is performed.

According to different types of solutions, selected AI algorithms and used models also vary. Currently, a main method for improving performance of a 5G network through AI is to enhance or replace an existing algorithm or processing module by using an algorithm and a model based on a neural network. In a specific scenario, an algorithm and a model based on a neural network can achieve better performance than a deterministic algorithm. Commonly used neural networks include a deep neural network, a convolutional neural network, a recurrent neural network, and the like. With the help of existing AI tools, neural networks can be built, trained, and verified.

It should be understood that training of an AI model requires support of a large volume of data. If the data volume is insufficient, the training process of the model may not converge, or a trained model may be overfitted. However, in many scenarios in wireless communication, labeled data cannot be obtained, or a volume of labeled data is small (due to collection overheads, transmission overheads, and the like). Therefore, a problem of model training when there is insufficient labeled data needs to be resolved in wireless communication. Therefore, a model training processing method of this application is provided.

A model training processing method provided in the embodiments of this application is described in detail below through some embodiments and application scenarios thereof with reference to the accompanying drawings.

As shown in FIG. 3, an embodiment of this application provides a model training processing method, including the following steps.

Step 301: A first device obtains first information, the first information including first data.

Step 302: The first device processes the first data by using a first model to obtain second data.

Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

In this embodiment of this application, the first device may be a network side device or a terminal, and the first data may be at least part of data for training the second model. The first data may be labeled data or unlabeled data. The first model may be understood as a model that enhances training data of the second model. For example, when the first data is labeled data, the first model is used for expanding the first data, to obtain the second data with a larger data volume. When the first data is unlabeled data, the first model is used for labeling the first data, so that more labeled training data can be obtained. In this way, after the first data is processed through the first model, more labeled training data can be obtained, thereby ensuring that there is enough labeled training data to train the second model, so that the second model can effectively converge during the training process, and performance of the second model is improved.

For example, in some embodiments, the first data is N pieces of labeled data. In this case, after the N pieces of labeled data are inputted into the first model, M pieces of labeled data (that is, the second data is M pieces of labeled data) may be outputted. In this case, M is greater than N, and usually, M is much greater than N.

For another example, in some embodiments, the first data is M pieces of unlabeled data. In this case, after the M pieces of unlabeled data are inputted into the first model, M pieces of labeled data (that is, the second data is M pieces of labeled data) may be outputted.

Optionally, the first information may be stored in the first device or the second device. In addition, the first model may be stored in the first device, or may be stored in the second device, and is sent by the second device to the first device. When the first device is a core network device, the second device may be a base station. When the first device is a base station (for example, a base station A), the second device may be a base station (for example, a base station B) or a terminal. When the first device is a terminal (for example, a terminal A), the second device may be a base station or a terminal (for example, a terminal B). It should be understood that, in this embodiment of this application, the first information and the first model are stored in different devices.

In this embodiment of this application, a first device obtains first information, the first information including first data; and the first device processes the first data by using a first model to obtain second data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data. In this way, more labeled training data can be obtained by using the first model, so that the second model can effectively converge in a training process, thereby improving performance of the second model. Therefore, reliability of AI-based wireless communication can be improved in this embodiment of this application.

Optionally, in some implementations, the first model is stored in the second device. In this case, before the processing, by the first device, the first data by using a first model, the method further includes:

receiving, by the first device, second information from a second device, the second information including the first model.

In this embodiment of this application, that the second information includes the first model may be understood as follows: The second information includes a parameter of the first model or address information of the first model, so that the first device can obtain the first model.

Further, in some embodiments, the second information further includes at least one of configuration information and first assistance information. The configuration information is used for indicating a usage manner of the first model. The first assistance information includes statistical information and environment information required for running the first model. The statistical information is used for representing a distribution feature of an input of the first model.

Optionally, the configuration information is used for indicating a usage method for the first model, and may include, for example, a data dimension or an input data format, an output dimension or an output data format, an input data volume, and an output data volume of the first model. The environment information may be understood as environment information related to a data augmentation algorithm of the first model. The environment information may include a software environment, a hardware environment, and the like required for running the model, for example, may include a software architecture, a hardware architecture, a power demand, a storage demand, and a computing power demand that need to be used. The statistical information may include distribution feature information such as a mean value and a variance of inputs of the model.

Optionally, in some embodiments, before the receiving, by the first device, second information from a second device, the method further includes:
sending, by the first device, a first request message to the second device, the first request message being used for requesting to obtain the second information.

In this embodiment of this application, when the first device needs to expand the first data, the second information may be obtained in a requested manner, thereby improving pertinence of obtaining the second information. Certainly, in other embodiments, the second device may alternatively proactively send the second information to the first device. For example, when the second device establishes a connection to the first device, the second device sends the second information to the first device. Alternatively, the second device may broadcast the second information, and the first device directly obtains the second information from broadcast information when needed.

Optionally, in some embodiments, after the processing, by the first device, the first data by using a first model to obtain second data, the method further includes:
training, by the first device, the second model based on the second data to obtain a third model.

In this embodiment of this application, the first device may train the second model to obtain the third model. The third model may be used on the first device or the second device.

It should be understood that the second model may be sent by the second device to the first device, or may be preconfigured in the first device in a protocol. This is not further limited herein.

Optionally, in some embodiments, if use of the third model is on the second device, after the training, by the first device, the second model based on the second data to obtain a third model, the method further includes:
sending, by the first device, the third model to the second device.

In this embodiment of this application, the sending the third model may be understood as sending a parameter of the third model or sending address information of the third model. This is not further limited herein. In this way, when inference of a corresponding service is performed by using the trained third model, accuracy of the inference can be improved, thereby ensuring communication reliability.

It should be noted that, initial training data of the second model may include the first data, and may further include labeled third data. If the first data is labeled data, the training data used may include the first data, the second data, and the third data during the training of the second model. If the first data is unlabeled data, the training data used may include the second data and the third data during the training of the second model.

Optionally, based on different storage locations of the first information, corresponding manners of obtaining the first information are different. For example, in some embodiments, the obtaining, by a first device, first information includes either of the following:

> receiving, by the first device, the first information from a second device; and
> obtaining, by the first device, the first information locally.

In this embodiment of this application, when the first information is stored in the second device, the first device may receive the first information from the second device. When the first information is stored in the first device, the first device may obtain the first information locally.

Optionally, before the receiving, by the first device, the first information from a second device, the method further includes:
sending, by the first device, instruction information to the second device, the instruction information being used for instructing the second device to send the first information.

In this embodiment of this application, the first information is stored in the second device, and the first device needs to instruct the second device to send the first information. For example, the first device may schedule the second device to send the first information.

Optionally, in some embodiments, before the receiving, by the first device, the first information from a second device, the method further includes:
receiving, by the first device, a second request message from the second device, the second request message being used by the second device to request to send the first information.

In this embodiment of this application, before the second device sends the first information, the second device may request the first device to send the first information. Subsequently, the second device may send the first information on a preconfigured resource, or the first device may dynamically schedule the second device to send the first information. For example, the second device is instructed, through the instruction information, to send the first information.

Optionally, in a case that the first device receives the first information from the second device, after the processing, by the first device, the first data by using a first model to obtain second data, the method further includes:

sending, by the first device, third information to the second device, the third information including the second data.

In this embodiment of this application, the process of training the second model is performed by the second device, and the first device needs to send the second data to the second device, for the second device to train the second model to obtain the third model. The training of the second model by the second device is similar to the training of the second model by the first device. For the definition of the training data, refer to the foregoing example. Details are not described herein again.

Further, in some embodiments, the third information further includes identification information, and the identification information is used for indicating that the second data is obtained based on the first model.

Optionally, in some embodiments, the first information further includes second assistance information, and the second assistance information is used for representing a distribution feature of the first data.

In this embodiment of this application, the second assistance information may include information representing distribution features such as a mean value and a variance of the first data.

For better understanding of this application, description is provided below through some examples.

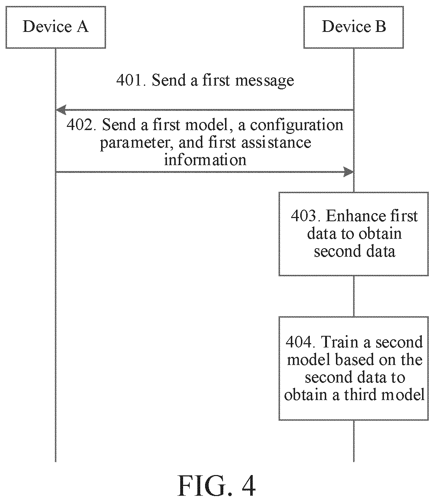

In some embodiments, a device A sends a first model to a device B, the device B performs data enhancement by using the received first model and first data of the device B to obtain second data, and the device B then trains a second model based on the second data. As shown in FIG. 4, the following procedure is specifically included.

Step 401: A device B sends a first message to a device A, the first message being used for requesting a first model, a configuration parameter, and first assistance information.

Step 402: A device A sends the first model, the configuration parameter, and the first assistance information to the device B.

Step 403: The device B enhances first data based on the first model, the configuration parameter, and the first assistance information to obtain second data.

Step 404: The device B trains a second model based on the second data to obtain a third model.

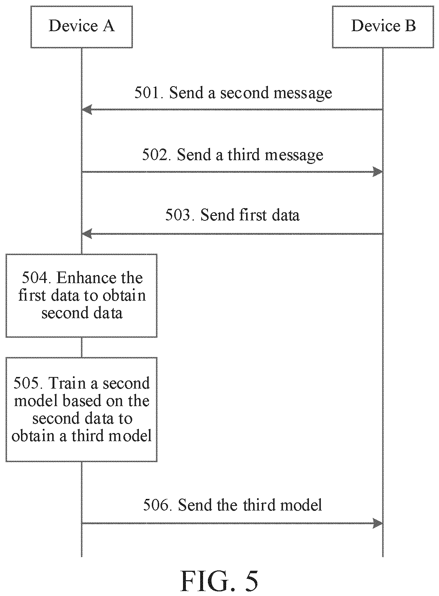

In some embodiments, the device B sends the first data to the device A, the device A performs data enhancement by using a received first model and a first model trained by the device A, to obtain second data, and then the device A trains a second model based on the second data to obtain a third model. Finally, the third model is sent to the device B. As shown in FIG. 5, the following procedure is specifically included.

Step 501: A device B sends a second message to a device A, the second message being used for requesting to send first data.

Step 502: The device A sends a third message to the device B, the third message being used for instructing to send the first data.

Step 503: The device B sends the first data to the device A.

Step 504: The device A enhances the first data based on a first model of the device A, a configuration parameter, and first assistance information to obtain second data.

Step 505: The device A trains a second model based on the second data to obtain a third model.

Step 506: The device A sends the third model to the device B.

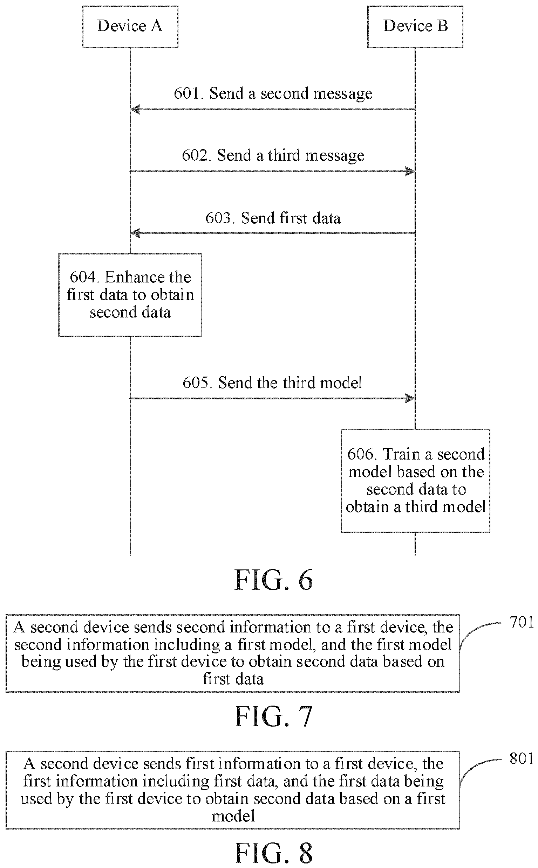

In some embodiments, the device B sends the first data to the device A, the device A performs data enhancement by using the received first model and a first model trained by the device A, to obtain second data, the device A then sends the second data to the device B, and the device B trains a second model by using the received second data. As shown in FIG. 6, the following procedure is specifically included.

Step 601: A device B sends a second message to a device A, the second message being used for requesting to send first data.

Step 602: The device A sends a third message to the device B, the third message being used for instructing to send the first data.

Step 603: The device B sends the first data to the device A.

Step 604: The device A enhances the first data based on a first model of the device A, a configuration parameter, and first assistance information to obtain second data.

Step 605: The device A sends the second data to the device B.

Step 606: The device B trains a second model based on the second data to obtain a third model.

Referring to FIG. 7, an embodiment of this application further provides a model training processing method, including:

Step 701: A second device sends second information to a first device, the second information including a first model, and the first model being used by the first device to obtain second data based on first data.

Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Optionally, the second information further includes at least one of configuration information and first assistance information. The configuration information is used for indicating a usage manner of the first model. The first assistance information includes statistical information and environment information required for running the first model. The statistical information is used for representing a distribution feature of an input of the first model.

Optionally, before the receiving, by the first device, second information from a second device, the method further includes:

receiving, by the second device, a first request message from the first device, the first request message being used for requesting to obtain the second information.

Referring to FIG. 8, an embodiment of this application further provides a model training processing method, including:

Step 801: A second device sends first information to a first device, the first information including first data, and the first data being used by the first device to obtain second data based on a first model.

Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Optionally, after the sending, by a second device, first information to a first device, the method further includes:

receiving, by the second device, a third model from the first device, the third model being obtained by the first device by training the second model based on the second data.

Optionally, after the sending, by a second device, first information to a first device, the method further includes:

receiving, by the second device, third information from the first device, the third information including the second data.

Optionally, the third information further includes identification information, and the identification information is used for indicating that the second data is obtained based on the first model.

Optionally, after the receiving, by the second device, third information from the first device, the method further includes:

training, by the second device, the second model based on the second data to obtain a third model.

Optionally, before the sending, by a second device, first information to a first device, the method further includes:

receiving, by the second device, instruction information from the first device, the instruction information being used for instructing the second device to send the first information.

Optionally, before the sending, by a second device, first information to a first device, the method further includes:

sending, by the second device, a second request message to the first device, the second request message being used by the second device to request to send the first information.

Optionally, the first information further includes second assistance information, and the second assistance information is used for representing a distribution feature of the first data.

The model training processing method provided in the embodiments of this application may be performed by a model training processing apparatus. In the embodiments of this application, an example in which the model training processing apparatus performs the model training processing method is used to describe the model training processing apparatus provided in the embodiments of this application.

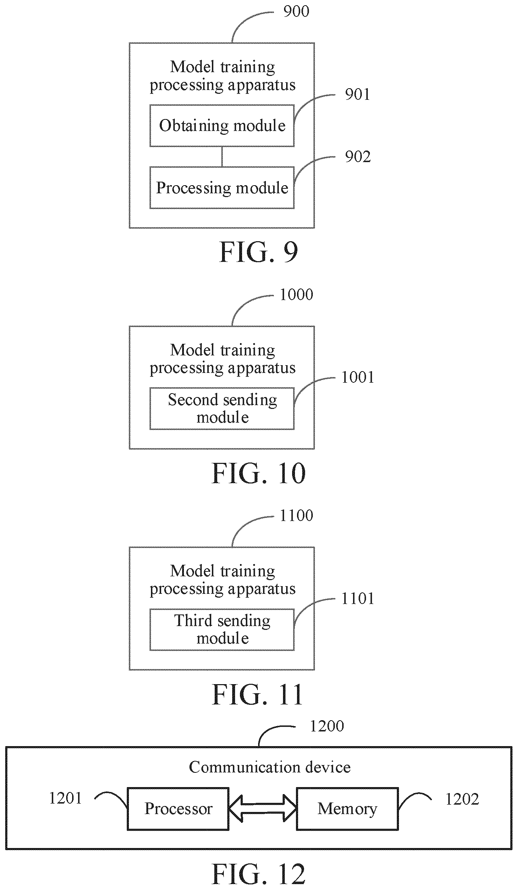

Referring to FIG. 9, an embodiment of this application further provides a model training processing apparatus. As shown in FIG. 9, the model training processing apparatus 900 includes:

an obtaining module 901, configured to obtain first information, the first information including first data; and
a processing module 902, configured to process the first data by using a first model to obtain second data.

Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Optionally, the model training processing apparatus 900 further includes:

a first receiving module, configured to receive second information from a second device, the second information including the first model.

Optionally, the second information further includes at least one of configuration information and first assistance information. The configuration information is used for indicating a usage manner of the first model. The first assistance information includes statistical information and environment information required for running the first model. The statistical information is used for representing a distribution feature of an input of the first model.

Optionally, the model training processing apparatus 900 further includes:

a first sending module, configured to send a first request message to the second device, the first request message being used for requesting to obtain the second information.

Optionally, the model training processing apparatus 900 further includes:

a first training module, configured to train the second model based on the second data to obtain a third model.

Optionally, the model training processing apparatus 900 further includes:
a first sending module, configured to send the third model to a second device.

Optionally, the obtaining module 901 includes either of the following:

> a receiving unit, configured to receive the first information from a second device; and
> an obtaining unit, configured to obtain the first information locally.

Optionally, the model training processing apparatus 900 further includes:
a first sending module, configured to send instruction information to the second device, the instruction information being used for instructing the second device to send the first information.

Optionally, the receiving unit is further configured to: receive a second request message from the second device, the second request message being used by the second device to request to send the first information.

Optionally, the model training processing apparatus 900 further includes:
a first sending module, configured to send third information to the second device, the third information including the second data.

Optionally, the third information further includes identification information, and the identification information is used for indicating that the second data is obtained based on the first model.

Optionally, the first information further includes second assistance information, and the second assistance information is used for representing a distribution feature of the first data.

Referring to FIG. 10, an embodiment of this application further provides a model training processing apparatus. As shown in FIG. 10, the model training processing apparatus 1000 includes:
a second sending module 1001, configured to send second information to a first device, the second information including a first model, and the first model being used by the first device to obtain second data based on first data.

Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Optionally, the second information further includes at least one of configuration information and first assistance information. The configuration information is used for indicating a usage manner of the first model. The first assistance information includes statistical information and environment information required for running the first model. The statistical information is used for representing a distribution feature of an input of the first model.

Optionally, the model training processing apparatus 1000 further includes:
a second receiving module, configured to receive a first request message from the first device, the first request message being used for requesting to obtain the second information.

Referring to FIG. 11, an embodiment of this application further provides a model training processing apparatus. As shown in FIG. 11, the model training processing apparatus 1100 includes:
a third sending module 1101, configured to send first information to a first device, the first information including first data, and the first data being used by the first device to obtain second data based on a first model.

Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Optionally, the model training processing apparatus 1100 further includes:
a third receiving module, configured to receive a third model from the first device, the third model being obtained by the first device by training the second model based on the second data.

Optionally, the model training processing apparatus 1100 further includes:
a third receiving module, configured to receive third information from the first device, the third information including the second data.

Optionally, the third information further includes identification information, and the identification information is used for indicating that the second data is obtained based on the first model.

Optionally, the model training processing apparatus 1100 further includes:
a second training module, configured to train the second model based on the second data to obtain a third model.

Optionally, the model training processing apparatus 1100 further includes:
a third receiving module, configured to receive instruction information from the first device, the instruction information being used for instructing the second device to send the first information.

Optionally, the third sending module 1101 is further configured to send a second request message to the first device, the second request message being used by the second device to request to send the first information.

Optionally, the first information further includes second assistance information, and the second assistance information is used for representing a distribution feature of the first data.

The model training processing apparatus in this embodiment of this application may be an electronic device, for example, an electronic device with an operating system, or may be a component in an electronic device, for example, an integrated circuit or a chip. The electronic device may be a terminal or a device other than the terminal. For example, the terminal may include, but is not limited to, the types of the terminal 11 listed above. The another device may be a server, a network attached storage (Network Attached Storage, NAS), or the like. This is not specifically limited in this embodiment of this application.

The model training processing apparatus provided in this embodiment of this application can implement the processes implemented in the method embodiments of FIG. 3 to FIG. 8 and achieve the same technical effects. To avoid repetition, details are not described herein again.

Optionally, as shown in FIG. 12, an embodiment of this application further provides a communication device 1200, including a processor 1201 and a memory 1202. The memory 1202 stores a program or an instruction runnable on the processor 1201. The program or the instruction, when executed by the processor 1201, implements the steps of the foregoing model training processing method embodiment, and the same technical effects can be achieved. To avoid repetition, details are not described herein again.

An embodiment of this application further provides a terminal, including a processor and a communication interface. When the terminal is a first device, the processor is configured to obtain first information, the first information including first data; and process the first data by using a first model to obtain second data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the terminal is a first device, the communication interface is configured to send second information to the first device, the second information including a first model, and the first model being used by the first device to obtain second data based on first data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the terminal is a first device, the communication interface is configured to send first information to the first device, the first information including first data, and the first data being used by the first device to obtain second data based on a first model. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

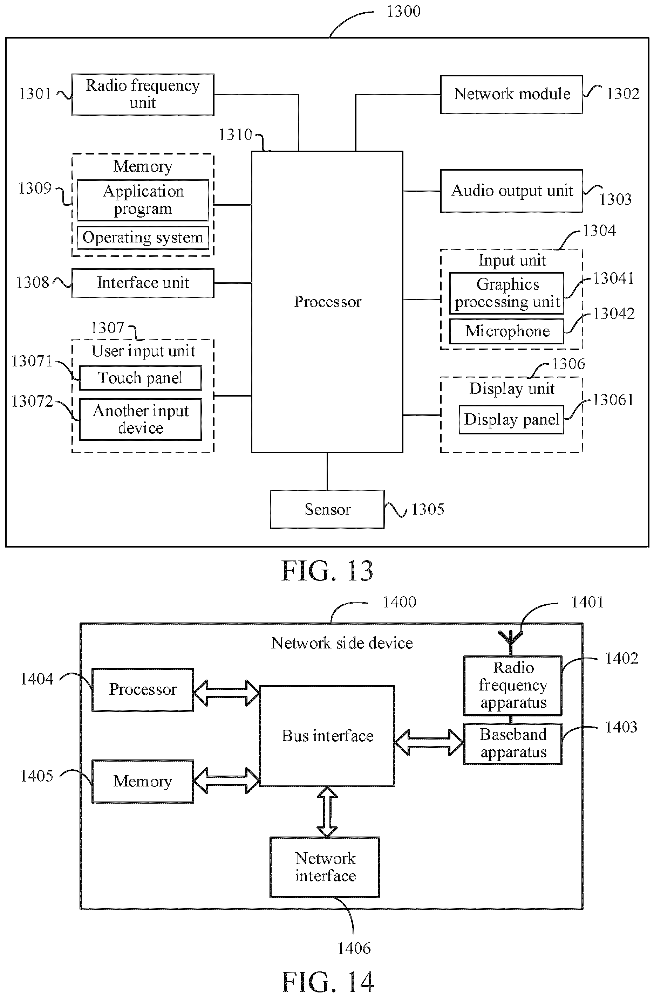

This embodiment of the terminal corresponds to the foregoing method embodiment of the terminal side. Implementation processes and implementations of the foregoing method embodiment are all applicable to this embodiment of the terminal, and the same technical effects can be achieved. Specifically, FIG. 13 is a schematic diagram of a hardware structure of a terminal that implements an embodiment of this application.

The terminal 1300 includes, but is not limited to: at least some components in a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that, the terminal 1300 may further include a power supply (such as a battery) for supplying power to each component. The power supply may be logically connected to the processor 1310 by using a power management system, thereby implementing functions, such as charging, discharging, and power consumption management, by using the power management system. The terminal structure shown in FIG. 13 constitutes no limitation on the terminal, and the terminal may include more or fewer components than those shown in the figure, or some components may be combined, or a different component deployment may be used. Details are not described herein.

It should be understood that in this embodiment of this application, the input unit 1304 may include a graphics processing unit (Graphics Processing Unit, GPU) 13041 and a microphone 13042. The graphics processing unit 13041 processes image data of still pictures or videos captured by an image capture apparatus (such as a camera) in a video capture mode or an image capture mode. The display unit 1306 may include a display panel 13061. The display panel 13061 may be configured in the form of a liquid crystal display, an organic light-emitting diode, or the like. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include, but is not limited to, a physical keyboard, a functional button (such as a sound volume control button or a power button), a trackball, a mouse, or a joystick. Details are not described herein.

In this embodiment of this application, after receiving downlink data from a network side device, the radio frequency unit 1301 may transmit the downlink data to the processor 1310 for processing. In addition, the radio frequency unit 1301 may send uplink data to the network side device. Usually, the radio frequency unit 1301 includes, but is not limited to, an antenna, an amplifier, a transceiver, a coupler, a low noise amplifier, a duplexer, and the like.

The memory 1309 may be configured to store a software program or instruction and various data. The memory 1309 may mainly include a first storage area storing a program or an instruction and a second storage area storing data. The first storage area may store an operating system, an application program or an instruction required by at least one function (for example, a sound playing function or an image playing function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1309 in this embodiment of this application includes, but is not limited to, these memories and any other suitable types of memories.

The processor 1310 may include one or more processing units. Optionally, the processor 1310 integrates an application processor and a modem processor. The application processor mainly processes operations related to the operating system, a user interface, the application program, and the like. The modem processor mainly processes a wireless communication signal, and is, for example, a baseband processor. It may be understood that, the modem processor may alternatively not be integrated in the processor 1310.

When the terminal is a first device, the processor 1310 is configured to obtain first information, the first information including first data; and process the first data by using a first model to obtain second data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the terminal is a first device, the radio frequency unit 1301 is configured to send second information to the first device, the second information including a first model, and the first model being used by the first device to obtain second data based on first data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the terminal is a first device, the radio frequency unit 1301 is configured to send first information to the first device, the first information including first data, and the first data being used by the first device to obtain second data based on a first model. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

An embodiment of this application further provides a network side device, including a processor and a communication interface. When the network side device is a first device, the processor is configured to obtain first information, the first information including first data; and process the first data by using a first model to obtain second data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the network side device is a first device, the communication interface is configured to send second information to the first device, the second information including a first model, and the first model being used by the first device to obtain second data based on first data. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

Alternatively, when the network side device is a first device, the communication interface is configured to send first information to the first device, the first information including first data, and the first data being used by the first device to obtain second data based on a first model. Both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

This network side device embodiment corresponds to the foregoing network side device method embodiment. Implementation processes and implementations of the foregoing method embodiment may all be applied to this network side device embodiment, and the same technical effects can be achieved.

Specifically, an embodiment of this application further provides a network side device. As shown in FIG. 14, the network side device 1400 includes: an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and sends the received information to the baseband apparatus 1403 for processing. In a downlink direction, the baseband apparatus 1403 processes and sends to-be-sent information to the radio frequency apparatus 1402. The radio frequency apparatus 1402 processes received information and sends the information through the antenna 1401.

The method performed by the network side device in the foregoing embodiment may be implemented in the baseband apparatus 1403. The baseband apparatus 1403 includes a baseband processor.

The baseband apparatus 1403 may include, for example, at least one baseband board. A plurality of chips are disposed on the baseband board. As shown in FIG. 14, one chip is, for example, the baseband processor, and is connected to the memory 1405 through a bus interface, to call a program in the memory 1405 to perform the operations of the network device shown in the foregoing method embodiment.

The network side device may further include a network interface 1406. The interface is, for example, a common public radio interface (common public radio interface, CPRI).

Specifically, the network side device 1400 of this embodiment of the present invention further includes: an instruction or a program stored in the memory 1405 and runnable on the processor 1404. The processor 1404 calls the instruction or the program in the memory 1405 to perform the method performed by each module shown in FIG. 9 to FIG. 11, and the same technical effects are achieved. To avoid repetition, details are not described herein again.

An embodiment of this application further provides a readable storage medium, storing a program or an instruction. The program or the instruction, when executed by a processor, implements the processes of the foregoing model training processing method embodiment, and the same technical effects can be achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disc.

An embodiment of this application further provides a chip, including a processor and a communication interface. The communication interface is coupled to the processor. The processor is configured to run a program or an instruction to implement the processes of the foregoing model training processing method embodiment, and the same technical effects can be achieved. To avoid repetition, details are not described herein again.

It should be understood that, the chip mentioned in this embodiment of this application may also be referred to as a system on a chip, a system chip, a chip system, a system-on-chip, or the like.

An embodiment of this application further provides a computer program/program product, stored in a storage medium and executed by at least one processor to implement the processes of the model training processing method embodiment, and the same technical effects can be achieved. To avoid repetition, details are not described herein again.

It should be noted that, in this specification, the term "include", "comprise", or any other variant thereof is intended to cover a non-exclusive inclusion, so that a process, method, article, or apparatus including a series of elements includes not only those elements, but also other elements not expressly listed, or elements inherent to such a process, method, article, or apparatus. Without more restrictions, the elements defined by the sentence "including a ..." do not exclude the existence of other identical elements in the process, method, article, or apparatus including the elements. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by means of software plus a necessary universal hardware platform, or certainly, by using hardware. However, in many cases, the former is a preferred implementation. Based on such an understanding, the technical solutions of this application essentially, or a part contributing to the related art, may be implemented in a form of a computer software product.

The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

The embodiments of this application have been described above with reference to the accompanying drawings, but this application is not limited to the foregoing specific implementations. The foregoing specific implementations are only illustrative instead of restrictive. Under the inspiration of this application, without departing from the purpose of this application and the scope of protection of the claims, a person of ordinary skill in the art can still make many forms, which all fall within the protection of this application.

**Claims**

1. A model training processing method, comprising:

   obtaining, by a first device, first information, the first information comprising first data; and
   processing, by the first device, the first data by using a first model to obtain second data, wherein
   both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

2. The method according to claim 1, wherein before the processing, by the first device, the first data by using a first model, the method further comprises:
   receiving, by the first device, second information from a second device, the second information comprising the first model.

3. The method according to claim 2, wherein the second information further comprises at least one of configuration information and first assistance information, the configuration information is used for indicating a usage manner of the first model, the first assistance information comprises statistical information and environment information required for running the first model, and the statistical information is used for representing a distribution feature of an input of the first model.

4. The method according to claim 2, wherein before the receiving, by the first device, second information from a second device, the method further comprises:

sending, by the first device, a first request message to the second device, the first request message being used for requesting to obtain the second information.

5. The method according to claim 1, wherein after the processing, by the first device, the first data by using a first model to obtain second data, the method further comprises:
   training, by the first device, the second model based on the second data to obtain a third model.

6. The method according to claim 5, wherein after the training, by the first device, the second model based on the second data to obtain a third model, the method further comprises:
   sending, by the first device, the third model to a second device.

7. The method according to claim 1, wherein the obtaining, by a first device, first information comprises either of the following:

   receiving, by the first device, the first information from a second device; and
   obtaining, by the first device, the first information locally.

8. The method according to claim 7, wherein before the receiving, by the first device, the first information from a second device, the method further comprises: sending, by the first device, instruction information to the second device, the instruction information being used for instructing the second device to send the first information.

9. The method according to claim 7, wherein before the receiving, by the first device, the first information from a second device, the method further comprises: receiving, by the first device, a second request message from the second device, the second request message being used by the second device to request to send the first information.

10. The method according to claim 7, wherein in a case that the first device receives the first information from the second device, after the processing, by the first device, the first data by using a first model to obtain second data, the method further comprises: sending, by the first device, third information to the second device, the third information comprising the second data.

11. The method according to claim 10, wherein the third information further comprises identification information, and the identification information is used for indicating that the second data is obtained based on the first model.

12. The method according to claim 1, wherein the first information further comprises second assistance information, and the second assistance information is used for representing a distribution feature of the first data.

13. A model training processing method, comprising:

sending, by a second device, second information to a first device, the second information comprising a first model, and the first model being used by the first device to obtain second data based on first data, wherein

both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

14. The method according to claim 13, wherein the second information further comprises at least one of configuration information and first assistance information, the configuration information is used for indicating a usage manner of the first model, the first assistance information comprises statistical information and environment information required for running the first model, and the statistical information is used for representing a distribution feature of an input of the first model.

15. The method according to claim 13, wherein before the receiving, by the first device, second information from a second device, the method further comprises: receiving, by the second device, a first request message from the first device, the first request message being used for requesting to obtain the second information.

16. A model training processing method, comprising:

sending, by a second device, first information to a first device, the first information comprising first data, and the first data being used by the first device to obtain second data based on a first model, wherein

both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

17. The method according to claim 16, wherein after the sending, by a second device, first information to a first device, the method further comprises: receiving, by the second device, a third model from the first device, the third model being obtained by the first device by training the second model based on the second data.

18. The method according to claim 16, wherein after the sending, by a second device, first information to a first device, the method further comprises: receiving, by the second device, third information from the first device, the third information comprising the second data.

19. The method according to claim 18, wherein the third information further comprises identification information, and the identification information is used for indicating that the second data is obtained based on the first model.

20. The method according to claim 18, wherein after the receiving, by the second device, third information from the first device, the method further comprises: training, by the second device, the second model based on the second data to obtain a third model.

21. The method according to claim 16, wherein before the sending, by a second device, first information to a first device, the method further comprises: receiving, by the second device, instruction information from the first device, the instruction information being used for instructing the second device to send the first information.

22. The method according to claim 16, wherein before the sending, by a second device, first information to a first device, the method further comprises: sending, by the second device, a second request message to the first device, the second request message being used by the second device to request to send the first information.

23. The method according to claim 16, wherein the first information further comprises second assistance information, and the second assistance information is used for representing a distribution feature of the first data.

24. A model training processing apparatus, comprising:

an obtaining module, configured to obtain first information, the first information comprising first data; and

a processing module, configured to process the first data by using a first model to obtain second data, wherein

both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

25. A model training processing apparatus, comprising:

a second sending module, configured to send second information to a first device, the second information comprising a first model, and the first model being used by the first device to obtain second data based on first data, wherein both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

26. A model training processing apparatus, comprising:

a third sending module, configured to send first information to a first device, the first information comprising first data, and the first data being used by the first device to obtain second data based on a first model, wherein both the first data and the second data are usable for training a second model, the second model is a service model, and the second data meets at least one of the following: in a case that the first data is unlabeled data, the second data is labeled data; and a data volume of the second data is greater than a data volume of the first data in a case that the first data is labeled data.

27. A terminal, comprising a processor and a memory, wherein the memory stores a program or an instruction runnable on the processor, and the program or the instruction, when executed by the processor, implements the steps of the model training processing method according to any one of claims 1 to 23.

28. A network side device, comprising a processor and a memory, wherein the memory stores a program or an instruction runnable on the processor, and the program or the instruction, when executed by the processor, implements the steps of the model training processing method according to any one of claims 1 to 23.

29. A readable storage medium, storing a program or an instruction, wherein the program or the instruction, when executed by a processor, implements the steps of the model training processing method according to any one of claims 1 to 23.

FIG. 1

FIG. 2

A first device obtains first information, the first information including first data — 301

The first device processes the first data by using a first model to obtain second data — 302

FIG. 3

FIG. 4

FIG. 5

Device A | Device B

601. Send a second message

602. Send a third message

603. Send first data

604. Enhance the first data to obtain second data

605. Send the third model

606. Train a second model based on the second data to obtain a third model

## FIG. 6

A second device sends second information to a first device, the second information including a first model, and the first model being used by the first device to obtain second data based on first data — 701

## FIG. 7

A second device sends first information to a first device, the first information including first data, and the first data being used by the first device to obtain second data based on a first model — 801

## FIG. 8

900

Model training
processing apparatus

901

Obtaining module

902

Processing module

FIG. 9

1000

Model training
processing apparatus

1001

Second sending
module

FIG. 10

1100

Model training
processing apparatus

1101

Third sending
module

FIG. 11

1200

Communication device

1201

Processor

Memory

1202

FIG. 12

1300

Radio frequency unit — 1301

Network module — 1302

Memory — 1309
Application program
Operating system — 1310

Interface unit — 1308

Processor

Audio output unit — 1303

Input unit — 1304
Graphics processing unit — 13041
Microphone — 13042

User input unit — 1307
Touch panel — 13071
Another input device — 13072

Display unit — 1306
Display panel — 13061

Sensor — 1305

FIG. 13

1400

Network side device

1401

Processor — 1404

Bus interface

Radio frequency apparatus — 1402

Baseband apparatus — 1403

Memory — 1405

Network interface

1406

FIG. 14

## INTERNATIONAL SEARCH REPORT

| | International application No. |
|---|---|
| | **PCT/CN2023/092028** |

| A. | CLASSIFICATION OF SUBJECT MATTER |
|---|---|

G06N20/00(2019.01)i

According to International Patent Classification (IPC) or to both national classification and IPC

| B. | FIELDS SEARCHED |
|---|---|

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS; CNTXT; VEN; EPTXT; WOTXT; USTXT; CNKI; IEEE: 模型, 训练, 样本, 数据, 标签, 扩增, 扩充, 通信, model, train, sample, data, label, augment, expand, communication

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114363921 A (VIVO COMMUNICATION TECHNOLOGY CO., LTD.) 15 April 2022 (2022-04-15)<br>description, paragraphs 20-180 | 1-29 |
| Y | CN 111860424 A (XIAMEN ZKTECO TECHNOLOGY CO., LTD.) 30 October 2020 (2020-10-30)<br>description, paragraphs 51-126 | 1-29 |
| Y | CN 111460156 A (SHENZHEN QIANHAI WEBANK CO., LTD.) 28 July 2020 (2020-07-28)<br>description, paragraphs 49-115 | 1-29 |
| A | CN 113965993 A (VIVO COMMUNICATION TECHNOLOGY CO., LTD.) 21 January 2022 (2022-01-21)<br>entire document | 1-29 |
| A | US 2020342329 A1 (SAP SE) 29 October 2020 (2020-10-29)<br>entire document | 1-29 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 July 2023** | **20 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/092028**

| Patent document cited in search report | | | Publication date (day/month/year) | Patent family member(s) | | | Publication date (day/month/year) |
|---|---|---|---|---|---|---|---|
| CN | 114363921 | A | 15 April 2022 | WO | 2022078276 | A1 | 21 April 2022 |
| CN | 111860424 | A | 30 October 2020 | CN | 111860424 | B | 11 July 2023 |
| CN | 111460156 | A | 28 July 2020 | | None | | |
| CN | 113965993 | A | 21 January 2022 | WO | 2022017359 | A1 | 27 January 2022 |
| US | 2020342329 | A1 | 29 October 2020 | US | 11640536 | B2 | 02 May 2023 |

Form PCT/ISA/210 (patent family annex) (July 2022)

**EP 4 521 309 A1**

**Patent documents cited in the description**

- CN 202210489247